# EUROPÄISCHE PATENTANMELDUNG

(11) **EP 0 857 707 A2**
(43) Veröffentlichungstag der Anmeldung: **12.08.1998**
(21) Anmeldenummer: 98100659.6
(22) Anmeldetag: 16.01.1998
(51) Int. Cl.: C04B 41/88, C03C 17/00, C09D 5/00, C04B 111/82

(54) **Dekorpräparat zur Herstellung goldhaltiger Dekore und dessen Verwendung**

(30) Priorität: 06.02.1997 DE 19704479
(71) Anmelder: CERDEC AKTIENGESELLSCHAFT KERAMISCHE FARBEN, D-60327 Frankfurt (DE)
(72) Erfinder: Schulz, Andreas, Dr., 63263 Neu-Isenburg (DE); Giesecke, Norbert, 63546 Hammersbach (DE)

(57) **Zusammenfassung**

Erfindungsgemäße Dekorpräparate zur Herstellung goldhaltiger Dekore, insbesondere Dekore auf einbrennfähigen Substraten, enthalten als Quelle für Gold einen ligandenstabilisierten Goldcluster oder ein ligandenstabilisiertes Goldkolloid und zusätzlich ein organisches Bindemittel und/oder eine anorganische Komponente aus der Reihe der Glasfritten, Silikate, Oxide und oxid- / silikatbildenden Vorstufen. Bevorzugte Quelle für Gold ist Au₅₅[(C₆H₅)₂P(m-C₆H₄SO₃Na)]₁₂CL₆ oder ein mit dem gleichen Phosphan stabilisiertes Goldkolloid.

Glanzgold-, Poliergold- und Lüsterpräparate enthalten außer der Quelle ligandenstabilisierten Golds ein organisches Bindemittel. Ein Dekorpräparat für purpurfarbene Dekore enthält außer der Dekorfarbe aus der Quelle für Gold und der anorganischen Komponente meistens auch ein Medium aus einem organischen Bindemittel und einem Lösungsmittel.

Die Dekorpräparate sind sowohl zur Erzeugung keramischer Dekore als auch zum Einfärben von Kunststoffen und Lacken geeignet.

## Beschreibung

Die Erfindung richtet sich auf neue Dekorpräparate zur Herstellung goldhaltiger Dekore, umfassend eine Quelle für Gold und ein organisches Bindemittel und/oder eine anorganische Komponente aus der Reihe der Gläser, Oxide, Silikate sowie oxid- und silikatbildenden Vorstufen. Erfindungsgemäße Dekorpräparate lassen sich zur Erzeugung von Glanzgold- und Poliergolddekoren, purpurfarbenen Dekoren sowie lüsterglänzenden Dekoren unterschiedlicher Farbschattierungen verwenden.

Dekorpräparate zur Herstellung goldhaltiger Dekore aus einbrennfähigen Substraten, wie Glas, Porzellan und anderen keramischen Werkstoffen, sind bekannt: Es handelt sich hierbei unter anderem um sogenannte Glanzgold- und Poliergoldpräparate, womit hochglänzende oder seidenmatte Goldfilmdekore erzeugt werden können. Ähnlich zusammengesetzte Präparate mit geringerem Goldgehalt und häufig zusätzlich einem Gehalt an gelösten Verbindungen anderer Metalle, wie insbesondere solchen von Ti, V, Cr, Fe, Co, Ni, Sn, Bi und Zr, finden als Lüsterpräparate Anwendung, welche einen irisierenden Lüsterglanz bei von der Metallzusammensetzung abhängiger Färbung aufweisen. Schließlich sind auch purpurfarbene Dekorfarben und sie enthaltende Präparate bekannt, welche als farbgebende Komponenten kolloidales Gold in oder/und auf einer anorganischen Matrix, insbesondere Glasflüssen, enthalten.

Glanzgold-, Poliergold- und Lüsterpräparate enthalten in einem flüssigen Trägermedium, dessen Hauptkomponenten ein organisches Bindemittel und ein Lösungsmittel sind, eine Goldverbindung in gelöster Form. Bei diesen Goldverbindungen handelt es sich im allgemeinen um Gold(I)thiolate und Goldsulforesinate. Während für den genannten Zweck früher nur in organischen Lösungsmitteln lösliche Goldthiolate und -sulforesinate verfügbar waren, sind inzwischen auch wasserlösliche Gold(I)thiolate bekannt; beispielhaft wird auf die EP-A 0 514 073 und EP-A 0 688 265 hingewiesen, worin derartige Thiolate in Glanz- und Poliergoldpräparaten und deren Zusammensetzung ausführlich offenbart werden. Poliergoldpräparate enthalten oft zusätzlich Goldpulver und/oder eine unlösliche Goldverbindung. Die genannten Dekorpräparate enthalten zusätzlich meistens Flußmittel und Hilfsstoffe zur Einstellung der Verarbeitungs- und Gebrauchseigenschaften. Bei den Flußmitteln handelt es sich insbesondere um lösliche Verbindungen der Elemente B, Si, V, Cr, In, Zn, Sb, Bi und Rh, wobei Rh insbesondere den Glanz und Cr und Bi die Haftung des Goldfilms auf dem Substrat günstig beeinflussen. Obgleich dem Fachmann eine breite Palette an Gold(I)thiolaten zur Verfügung steht, besteht weiterhin ein Interesse an neuen Quellen für Gold in den genannten Präparaten.

Dekorpräparate mit einem auf kolloidalem Gold basierenden Purpurpigment sind lange bekannt. Die Herstellverfahren sind teilweise sehr aufwendig und/oder führen nicht zu ausreichend brennstabilen Pigmenten, was sich durch ein Verblassen der Farbe bei hoher Brenntemperatur, insbesondere oberhalb 1000 °C, zeigt. Beispielhaft wird auf die DE-A 44 11 103 sowie die noch nicht publizierte DE-Patentanmeldung 196 49 067.7 verwiesen.

Aufgabe der Erfindung ist die Bereitstellung neuer goldhaltiger Dekorpräparate. Die Dekorpräparate sollten durch Variation der Konzentrationsverhältnisse und Zusatzstoffe sowohl zur Erzeugung von Glanzgold- und Poliergoldfilmen als auch Dekoren mit Lüsterglanz und/oder Purpurfarbe eingesetzt werden können.

Gefunden wurde ein Dekorpräparat zur Herstellung goldhaltiger Dekore, insbesondere Dekore auf einbrennfähigen Substraten, umfassend eine Quelle für Gold und ein organisches Bindemittel und/oder eine anorganische Komponente aus der Reihe der Gläser, Oxide, Silikate sowie oxid- und silikatbildenden Vorstufen, ausgenommen Polyethylenimin-beschichtete Glimmer, das dadurch gekennzeichnet ist, daß es als Quelle für Gold einen ligandenstabilisierten Goldcluster oder ein ligandenstabilisiertes Goldkolloid in einer Menge von bis zu 40 Gew.-%, berechnet als Gold, enthält.

Bei Präparaten ohne oder nur einer geringen Menge an den genannten anorganischen Komponenten handelt es sich insbesondere um Glanzgold- und Poliergold- sowie Lüsterpräparate; derartige Präparate enthalten üblicherweise zusätzlich ein Lösungsmittel. Bei den Präparaten mit einem wesentlichen Anteil an mindestens einer der genannten anorganischen Komponenten handelt es sich um eine Purpur-Dekorfarbe, die zwecks Applikation mit einem Lösungsmittel und Bindemittel enthaltenden flüssigen Medium angepastet wird. Der anorganischen Komponente kommt die Funktion einer Matrix für das farbgebende Au-Kolloid sowie die Funktion eines Flusses zu, der beim Brand wesentlicher Bestandteil der Dekorschicht wird.

Kern der erfindungsgemäßen Dekorpräparate ist ihr Gehalt an Gold in Form eines ligandenstabilisierten Goldclusters oder eines ligandenstabilisierten Goldkolloids. Diese Quelle für Gold wurde bisher nie für Dekorpräparate in Betracht gezogen. Für Glanz- und Poliergoldpräparate wurde bisher ein Goldthiolat oder Goldsulforesinat eingesetzt. Bekannte Purpurpigmente enthalten zwar seit langem kolloidales Gold, nie wurden aber ligandenstabilisierte Goldcluster beziehungsweise Goldkolloide eingesetzt. Die Stabilisierung von Au-Clustern und Au-Kolloiden mittels ausgewählter Liganden ermöglicht ihren Einsatz zur Herstellung von stabileren, gut reproduzierbaren Präparaten. Zugleich wird die Palette an goldhaltigen Dekorpräparaten sowie die Möglichkeiten zu deren Herstellung erweitert. Das erfindungsgemäße Prinzip macht unter Einsatz der gleichen Quelle für Gold Präparate verschiedener Zusammensetzung und völlig unterschiedlicher Dekorwirkung zugänglich.

Der Goldgehalt erfindungsgemäßer Dekorpräparate in applikationsgerechter Form (geeignet für z. B. Siebdruck) kann in einem weiten Bereich liegen, nämlich zwischen etwa 0,01 und etwa 40 Gew.-%. Den höchsten Au-Gehalt wiesen meistens Poliergoldpräparate auf, jedoch lassen sich überraschenderweise auch hochglänzende erfinderische Poliergoldpräparate mit weniger als 10 Gew.-% Au erhalten. Glanzgoldpräparate weisen meistens einen Au-Gehalt im Bereich von 2 bis 20 Gew.-%, insbesondere 5 bis 15 Gew.-%, auf. Zur Erzeugung von Lüster- und Purpurdekoren enthalten die Präparate 0,05 bis 10 Gew.-%, meistens aber nur 0,1 bis 2 Gew.-% Au.

Ligandenstabilisierte Goldcluster und ligandenstabilisierte Goldkolloide können unterschiedlichste Liganden aufweisen. Bei den stabilisierenden Liganden kann es sich um monomere und polymere Verbindungen handeln. Unter den polymeren Verbindungen sind beispielhaft Polyethylenimin, Polyvinylalkohol, Gelatine, Albumin und Polyvinylimidazol zu nennen. Im Einzelfall ist vorab zu prüfen, ob eine ausreichende Stabilisierung und Löslichkeit des Clusters beziehungsweise Kolloids gegeben ist. Beispiele für monomere Ligandenstabilisatoren sind Phosphane, Amine und N-Heteroaromaten, wie Phenantrolin und Derivate davon.

Bevorzugt werden als Ligandenstabilisatoren Phosphane, insbesondere die inzwischen für die Stabilisierung von Au-Clustern und Au-Kolloide wohlbekannten Triarylphosphane der allgemeinen Formel 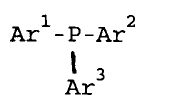 wobei die Arylgruppen Ar¹, Ar² und Ar³ gleich oder verschieden und Ar¹ und Ar² auch in ortho-Stellung direkt oder über eine Methylen- oder Ethylengruppe miteinander verbunden sein können und ausgewählt sind aus der Reihe Phenyl und in meta- oder/und in para-Stellung ein- oder zweifach substituiertem Phenyl, wobei die Substituenten ausgewählt sind aus der Reihe Methyl, Ethyl, Methoxy, Ethoxy, SO₃H, SO₃Me, COOH und COOMe und Me für Li, Na, K, NH₄ oder Mono-, Di-, Tri- oder Tetra-(C₁ bis C₄)alkylammonium steht.

Phosphane aus der Reihe P(Phenyl)₃, P(p-Tolyl)₃, P(p-Anisyl)₃, (Phenyl)₃₋ₙP(m-C₆H₄SO₃H)ₙ und (Phenyl)₃₋ₙP(m-C₆H₄SO₃Me)ₙ, wobei n für 1, 2 oder 3 steht und Me die vorgenannte Bedeutung hat, werden besonders bevorzugt.

Besonders bevorzugte ligandenstabilisierte Goldcluster, die in den erfindungsgemäßen Dekorpräparaten Einsatz finden, weisen die Formel Au₅₅[L]₁₂X_{6/m} auf, wobei L für eines der vorgenannten Phosphane und X für ein Anion der Wertigkeit m steht; X ist bevorzugt Chlorid. Für wäßrige Dekorpräparate finden insbesondere die Goldcluster Anwendung, welche im Phosphan-Liganden eine oder mehrere löslichmachende Substituenten, insbesondere eine oder mehrere Sulfonatgruppen aufweisen.

Derartige ligandenstabilisierte Goldcluster und Goldkolloide sind bekannt - siehe G. Schmid et al. in Polyhedron Vol. 7 (1988), S. 605-608 und Z. anorg. allg. Chem. 621 (1995), S. 1147-1152.

Aus Angew. Chem. 107 (1995), S. 1168-1169 sind Monolagen ligandenstabilisierter Au₅₅-Cluster mit dem Liganden (C₆H₅)₂P(m-C₆H₄SO₃H) auf mit Polyethylenimin beschichtetem Glimmer bekannt. In diesem Dokument wird aber in keiner Weise die Verwendung derartiger ligandenstabilisierter Goldcluster für Dekorpräparate nahegelegt.

Mit Phosphan-Liganden stabilisierte Goldkolloide sind aus Angew. Chem. 101 (1989), S. 773-774 bekannt. Die Stabilisierung erlaubt es, die Lösung des Kolloids einzudampfen und den Rückstand wieder aufzulösen, ohne daß es zu einer Koagulation kommt. Während die bevorzugten phosphanstabilisierten Goldcluster einen Teilchendurchmesser um 2,2 nm (mit Liganden) beziehungsweise etwa 1,4 nm (ohne Liganden) aufweisen, liegt der mittlere Teilchendurchmesser der ligandenstabilisierten Goldkolloide üblicherweise im Bereich von 10 bis 30 nm. Zwischen den Goldclustern mit den Goldkolloiden besteht ein kontinuierlicher Übergang, wenn gleich Zwischenglieder bisher nicht isoliert wurden. Bezüglich der Herstellung der Lösungen der ligandenstabilisierten Au-Cluster und Au-Kolloide wird auf die zuvor gewürdigten Dokumente verwiesen; vorzugsweise sind die Lösungen wäßrig.

Erfindungsgemäße Dekorpräparate können übliche organische Bindemittel enthalten, wie sie im Rahmen der Erzeugung von Glanzgold-, Poliergold-, Lüster- und üblichen Farbdekoren in der Fachwelt allgemein bekannt sind. Es handelt sich im allgemeinen um polymere organische Bindemittel, welche dem Dekor in ungebranntem Zustand eine ausreichende Haftung und Griffestigkeit vermitteln, jedoch beim Dekorbrand vollständig verbrennen. Geeignete Polymere, welche in gelöster oder in dispergierter Form im Dekorpräparat vorliegen, können, Homopolymere, Copolymere und Blockpolymere sein, etwa solche auf der Basis von Polyacrylat- und Polymethacrylatharzen, Polyvinylpyrrolidon (PVP), Celluloseether, Polyamiden, Polyethylenglykol, Polyestern, Polyacrylamiden, Polyvinylacetat, Polyvinylalkohol, Polyurethanharzen, Alkydharzen und Polyaminen sowie Gemischen davon. Die Harze können, insbesondere wenn sie in wäßrigen Systemen eingesetzt werden, löslichmachende Gruppen, wie Carboxylat-, Sulfonat-, Hydroxy- und/oder Amino- oder Ammoniumgruppen enthalten. Für wäßrige Systeme werden PVP, Polymethacrylate und Celluloseether besonders bevorzugt.

Bei den anorganischen Komponenten, welche gemäß einer Alternative in den erfindungsgemäßen Dekorpräparaten enthalten sind, handelt es sich um unterschiedlichste Gläser, Metalloxide und -silikate sowie um oxid- und silikatbildende Vorstufen von Elementen aus der Reihe Al, Si, Sn, Ti, Zr, Nb, Ta, Sc, Y, La, Ce und Zn. Bei den Vorstufen handelt es sich insbesondere um Oxidhydrate und durch ein Sol-Gel-Verfahren erzeugte Gele oder Xerogele der genannten Elemente. Die anorganischen Komponenten können in Form sehr feinteiliger Partikel, zweckmäßigerweise mit einem mittleren Korndurchmesser von 1 bis 20 µm, insbesondere 1 bis 10 µm, und einem möglichst engen Kornspektrum, eingesetzt und/oder durch eine Fällungsreaktion oder einen Sol-Gel-Prozeß während der Herstellung des Dekorpräparates erzeugt worden sein.

Beispiele für die genannten feinteiligen Partikel sind feingemahlene Glasfritten, natürliche und synthetische Silikate, wie Aluminosilikate, ferner einbrennstabile Metalloxide und Mischoxide, etwa SiO₂, ZrO₂, TiO₂, SnO₂ und farblose Spinelle. Besonders bevorzugt werden feingemahlene Glasfritten, da diese in chemisch unterschiedlichster Zusammensetzung und physikalischen Eigenschaften erhältlich sein und leicht auf das zu dekorierende Substrat abgestimmt werden können. Damit lassen sich Dekorfehler vermeiden.

Die während der Herstellung des Dekorpräparats in situ erzeugten oxid- und silikatbildenden Vorstufen der zuvor genannten Elemente, wovon Si, Zr, Ti, Al und insbesondere Sn bevorzugt werden, sind das Ergebnis einer Fällungsreaktion oder Umwandlung eines Sols in ein Gel löslicher Verbindungen der genannten Metalle. Die Fällung erfolgt üblicherweise durch pH-Einstellung auf einen EndpH-Wert im Bereich von etwa 1 bis 10; am Ende der Fällung wird ein pH-Wert im Bereich von 4 und 10, insbesondere im Bereich von 6 und 9 bevorzugt.

Bei den im Verfahren eingesetzten löslichen Metallverbindungen handelt es sich um solche, welche in wäßriger oder wäßrig-organischer Phase durch eine Kondensation oder eine Hydrolyse mit nachfolgender Kondensation und/oder durch Änderung des pH-Werts als Oxidhydrat beziehungsweise oxidbildendes Gel ausgefällt werden können. Geeignete lösliche Verbindungen sind beispielsweise Zinn(IV)chlorid und Hydrate davon, Zinn(IV)sulfat-dihydrat; AlCl₃, Al-acetat, Al-sulfat, Al-nitrat; Zr(IV)sulfat-tetrahydrat, Zr(NO₃)₄, Zirkonylchlorid-hydrate; Chloride, Nitrate oder Acetate von Scandium, Yttrium, Lanthan, Cer und Zink; wasserlösliche Silikate, insbesondere Wasserglas; Titanylsulfat. Eine bevorzugte Quelle für oxidbildende Gele von Si, Ti, Zr sind monomere und oligomere Alkoxyverbindungen dieser Elemente, wobei die Alkoxygruppen bevorzugt 1 bis 3 C-Atome aufweisen und außer Alkoxygruppen zusätzlich OH-Gruppen und Sauerstoffbrücken zwischen zwei Metallatomen anwesend sein können. Beispiele sind Si(OC₂H₅)₄, Ti(OC₂H₅)₄, Zr(C₂H₅)₄, (HO)ₙ₋₃(C₂H₅)ₙSi-O-Si(C₂H₅)ₙ(OH)ₙ₋₃ mit n = 1, 2, 3.

Die Dekorpräparate enthalten, soweit sie mittels üblicher Druck-, Beschichtungs- oder Maltechniken appliziert werden, meistens ein Lösungsmittelsystem, wobei dieser Begriff auch Lösungsmittelgemische einschließt. Sowohl organische als auch wäßrig-organische und im wesentlichen rein wäßrige Systeme kommen infrage. Die Lösungsmittelauswahl richtet sich nach der Löslichkeit der ligandenstabilisierten Quellen für Gold sowie nach der Löslichkeit des organischen Bindemittels. Lösungsmittel und organisches Bindemittel sind die wesentlichen Bestandteile üblicher Druckmedien. Unter den Lösungsmitteln sind beispielhaft Wasser, wasserlösliche einwertige niedere Alkohole, Glykole, Glykoläther, Ketone, Ester, Chlorkohlenwasserstoffe, aromatische und cycloaliphatische Kohlenwasserstoffe und ätherische Öle zu nennen. Wasser und wäßrig-organische Lösungsmittelgemische werden zunehmend bevorzugt.

Ein lösungsmittelfreies oder -armes Dekorpräparat, welches außer einem ligandenstabilisierten Au-Cluster oder Au-Kolloid im wesentlichen nur eine anorganische Komponente aus der Reihe der Glasfritten, Oxide, Silikate, und oxid- und/oder silikatbildenden Vorstufen enthält, kann als Dekorfarbe oder Purpurpigment bezeichnet werden und sowohl zur Einfärbung verschiedener Materialien, darunter Kunststoffen und Lacken, als auch zur Herstellung keramischer Dekore verwendet werden. Druckfähige Dekorpräparate für Purpurdekore enthalten im allgemeinen eine Dekorfarbe, also ein Präparat aus im wesentlichen dem ligandenstabilisierten Au-Cluster oder Au-Kolloid und einen anorganischen Fluß, und ein im wesentlichen ein Bindemittel und Lösungsmittel enthaltendes Druckmedium im Gewichtsverhältnis im Bereich von 0,2 bis 4, vorzugsweise 0,5 bis 2.

Der Anteil an polymeren Bindemitteln in den Präparaten für Glanzgold-, Poliergold und Lüsterdekore liegt üblicherweise im Bereich von 3 bis 45 Gew.-%, vorzugsweise zwischen 3 und 20 Gew.-%. Das Gewichtsverhältnis von Bindemittel zu Edelmetall liegt üblicherweise im Bereich zwischen 0,1 bis 2, vorzugsweise zwischen 0,2 und 1. Der Lösungsmittelgehalt im Präparat liegt im allgemeinen zwischen 10 und 90 Gew.-%, vorzugsweise 30 bis 80 Gew.-%. Bevorzugte Präparate sind wäßrig und enthalten keinen oder nur einen geringen Anteil an einem oder mehreren organischen Lösungsmitteln.

Glanzgoldpräparte können zusätzlich zu dem erfindungsgemäß zu verwendenden ligandenstabilisierten Au-Cluster oder Au-Kolloid ein bekanntes Gold(I)thiolat oder Goldsulforesinat enthalten, ferner farbtonmodifizierende gelöste Verbindungen anderer Edelmetalle, insbesondere von Ag, Pt, Pd. Poliergoldpräparate können zusätzlich Goldpulver enthalten. Die häufig anwesenden Hilfsstoffe zur Beeinflussung der Trocknungs- und Gebrauchseigenschaften des Präparats sowie Hilfsstoffe zur Erhöhung der Haftung, des Glanzes und der Brennstabilität des Goldfilms werden aus der Reihe bekannter Stoffe ausgewählt und in wirksamer Menge eingesetzt.

Präparate zur Erzeugung purpurfarbener Dekore können als anorganische Komponenten ein einbrennfähiges Material allein enthalten. Derartige Produkte eignen sich jedoch weniger für den Hochtemperaturbrand bei oberhalb 1000 °C bis 1400 °C, da sie mit zunehmender Temperatur verblassen. Hochtemperaturbrand-geeignete Präparate enthalten die Quelle für Gold in einer Matrix aus einem durch eine Copräzipitation oder ein Sol-Gel-Verfahren erzeugten oxidischen oder silikatischen Material oder einer Vorstufe hierfür, wie einem Oxidhydrat. Bei der genannten Copräzipitation oder Sol-Gel-Verfahren kann zusätzlich ein feinteiliges einbrennfähiges Material anwesend sein; auch derart erhältliche Dekorpräparate zeichnen sich durch eine gute Hochtemperaturbrandstabilität aus.

Die Herstellung der erfindungsgemäßen Dekorpräparate ist einfach. Sie umfaßt die Schritte Herstellung einer Lösung eines ligandenstabilisierten Au-Clusters oder eines ligandenstabilisierten Au-Kolloids und Zugabe eines organischen Bindemittels und/oder einer oder mehrerer anorganischen Komponenten aus der Reihe der Glasfritten, Oxide, oxid- und silikatbildenden Vorstufen und Silikate, wobei die genannten Vorstufen in situ aus löslichen Metallverbindungen erzeugt werden können. Zur Herstellung von Glanzgold-, Poliergold- und Lüsterpräparaten werden die bereits ausführlich beschriebenen Bestandteile gemischt und homogenisiert. Mit Ausnahme von Poliergoldpräparaten, die zusätzlich Goldpulver und/oder unlösliche Goldverbindungen enthalten können, sind die einzelnen Komponenten derartiger Präparate im System gelöst.

Zur Herstellung von Präparaten für Purpurdekore wird die Lösung der Quelle für Gold mit der oder den anorganischen Komponenten, etwa einer Glasfritte, zusammengebracht. Durch Abdampfen des Lösungsmittels werden purpurfarbene Pigmente erhalten. Besser ist es, die ein Trägermaterial und einen ligandenstabilisierten Goldcluster oder Goldkolloid enthaltene Suspension einer Copräzipitation oder einem Sol-Gel-Prozeß zuzuführen. Das Prinzip und viele Varianten der Durchführung der Copräzipitation und des Sol-Gel-Prozesses zum Umhüllen feinteiliger Partikel mit oxidischen und/oder silikatischen Materialien ist der Fachwelt lange bekannt - beispielhaft wird auf die DE 196 25 658 und DE 197 39 124.9 verwiesen. Hierbei wird z. B. die vorgenannte Suspension mit einer Lösung einer die Matrix bildenden löslichen Metallverbindung mit einem Fällungsmittel, üblicherweise einer Base, zusammengebracht und die Copräzipitation bei einem pH-Wert im Bereich von 1 bis 10 beendet. Das Copräzipitat, ein purpurfarbener Farbköper, kann abgetrennt und getrocknet werden. Gemäß einer Alternative lassen sich purpurfarbene Farbkörper auch durch einen Sol-Gel-Prozeß herstellen, wobei als oxid- und/oder silikatbildende Vorstufe eine in einem Lösungsmittel gelöste Metallverbindung aus der Reihe der Tetraalkoxysilane, Alkyltrialkoxysilane, Tetraalkoxytitanate, Tetraalkoxyzirkonate, teilhydrolysierten Stoffen der genannten Alkoxyverbindungen, Zirkonylchloridhydrate, Wasserglas und Zinn(IV)sulfathydrate eingesetzt wird; in Gegenwart von Wasser kommt es zum Teil zur Hydrolyse und Kondensation.

Ein Vorteil der erfindungsgemäßen Dekorpräparate ist, daß sie trotz unterschiedlicher Dekorwirkung stets die gleiche Quelle für Gold enthalten. Die Dekorpräparate lassen sich mit einfachsten Mitteln auf den jeweiligen Anwendungszweck hin optimieren.

Anhand der Beispiele wird die Erfindung weiter erläutert.

### Beispiele 1 und 2

### Herstellung und Anwendung von purpurfarbenen Dekorpräparaten:

0,13 g ligandenstabilisierter Goldcluster der Formel Au₅₅[(C₆H₅)₂P(meta C₆H₄SO₃Na)]₁₂Cl₆ (= TPPMS-Na) wurden in 50 ml Wasser gelöst und 30 min bei 20 °C gerührt. Anschließend wurden 2,91 g eines Glasflusses zugegeben und weitere 30 min gerührt. Das Lösungsmittel wurde am Rotationsverdampfer abgezogen, das purpurfarbene Dekorpräparat getrocknet.

Zur Herstellung eines purpurfarbenen Dekors wurde in üblicher Weise das Dekorpräparat mit einem Siebdruckmedium (Nr. 80820 der Firma Cerdec AG) angepastet, mit einem 140 S-Sieb auf Abziehbildpapier gedruckt und mit Filmlösung (Nr. 80450 der Firma Cerdec AG) überfilmt. Das Abziehbild wurde auf Porzellan aufgezogen und bei einer Aufheizrate von 400 k/h und einer Haltezeit von 0,2 h bei 800 °C eingebrannt.

| | Beispiel 1 | | Beispiel 2 | |
|---|---|---|---|---|
| Glasfluß | bleifreie Glasfritte (Nr. 10163 / Cerdec AG) | | bleihaltige Glasfritte (Nr. 10136 / Cerdec AG) | |
| Gewichtsverhältnis Dekorpräparat zu Medium | 2,5 / 2,5 | | 3,0 / 2,4 | |
| Farbwerte nach CIE-Lab (DIN 5033, Teil 3) | L* | 53,34 | L* | 49,01 |
| | a* | 26,20 | a* | 24,43 |
| | b* | -2,20 | b* | -4,47 |

### Beispiel 3

### Herstellung und Anwendung eines Glanzgoldpräparats

### Hergestellt wurde eine Paste der nachstehend genannten Zusammensetzung:

| | |
|---|---|
| Goldcluster (TPPMS-Na) | 0,353 g |
| Wasser | 1,790 g |
| N(C₂H₅)₃ | 0,137 g |
| Haftungs- und Glanzhilfsmittel auf Basis von Rh-, Cr- und Bi-Salzen | 0,015 g |
| Polyvinylpyrrolidon | 0,220 g |
| Ammoniumpolysulfid | 0,075 g |
| Anionisches Tensid | 0,012 g |

Der Goldgehalt der Paste betrug 9,70 %, der Rückstand 9,97 %.

Um Druckfähigkeit zu erreichen, wurde die Paste mit Wasser auf 6,2 % Rückstand verdünnt. Die verdünnte Paste (= Glanzgoldpräparat) wurde auf Porzellan aufgetragen und eingebrannt - Aufheizzeit 1 Stunde, Haltezeit bei 820 °C 10 Minuten. Erhalten wurde ein glänzender Goldfilm.

Durch Verdünnen der Paste mit Ethanol auf eine Konzentration entsprechend einem Rückstand von 1,45 Gew.-%, Auftragen auf Porzellan und Einbrennen (Bedingung wie oben) wurde bei hoher Auftragsstärke ein matter Goldfilm, bei niedriger Schichtstärke ein purpurfarbenes glänzendes Lüsterdekor erhalten.

### Beispiel 4

### Herstellt wurde ein Poliergoldpräparat der nachstehenden Zusammensetzung:

| | |
|---|---|
| Goldcluster (TPPMS-Na) | 0,135 |
| Wasser | 1,814 |
| Haftungs- und Glanzhilfsmittel auf Basis Rh-, Cr- und Bi-Salzen | 0,006 |
| Polyvinylpyrrolidon | 0,036 |
| (NH₄)₂Sx | 0,010 |
| Tensid (nicht ionisch) | 0,009 |

Die Paste enthielt 9,556 Gew.-% Au.

Nach dem Auftragen der Paste auf Porzellan wurde eingebrannt - 1 h Aufheizzeit, 10 min Haltezeit bei 820 °C. Erhalten wurde ein Dekor in Form eines Goldfilms, der hochglänzend poliert werden konnte. Diese Paste eignete sich damit als niedrig prozentiges Poliergoldpräparat.

## Patentansprüche

1. Dekorpräparat zur Herstellung goldhaltiger Dekore, insbesondere Dekore auf einbrennfähigen Substraten, umfassend eine Quelle für Gold und ein organisches Bindemittel und/oder eine anorganische Komponente aus der Reihe der Gläser, Oxide, Silikate sowie oxid- und silikatbildenden Vorstufen, ausgenommen Polyethylenimin-beschichtete Glimmer,
dadurch gekennzeichnet,
daß es als Quelle für Gold einen ligandenstabilisierten Goldcluster oder ein ligandenstabilisiertes Goldkolloid in einer Menge von bis zu 40 Gew.-%, berechnet als Gold, enthält.

2. Dekorpräparat nach Anspruch 1,
dadurch gekennzeichnet,
daß der Goldcluster oder das Goldkolloid mit einem Phosphan der allgemeinen Formel 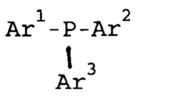 ligandenstabilisiert ist, wobei die Arylgruppen Ar¹, Ar² und Ar³ gleich oder verschieden und Ar¹ und Ar² auch in ortho-Stellung direkt oder über eine Methylen- oder Ethylengruppe miteinander verbunden sein können und ausgewählt sind aus der Reihe Phenyl und in meta- oder/und in para-Stellung ein- oder zweifach substituiertem Phenyl, wobei die Substituenten ausgewählt sind aus der Reihe Methyl, Ethyl, Methoxy, Ethoxy, SO₃H, SO₃Me, COOH und COOMe und Me für Li, Na, K, NH₄ oder Mono-, Di-, Tri- oder Tetra-(C₁ bis C₄)alkylammonium steht.

3. Dekorpräparat nach Anspruch 2,
dadurch gekennzeichnet,
daß das Phosphan ausgewählt ist aus der Reihe P(Phenyl)₃, P(p-Tolyl)₃, P(p-Anisyl)₃, (Phenyl)₃₋ₙP(m-C₆H₄SO₃H)ₙ und (Phenyl)₃₋ₙP(m-C₆H₄SO₃Me)ₙ, wobei n für 1, 2 oder 3 steht und Me die vorgenannte Bedeutung hat.

4. Dekorpräparat nach Anspruch 2 oder 3,
dadurch gekennzeichnet,
daß es einen ligandenstabilisierten Goldcluster der allgemeinen Formel Au₅₅[L]₁₂X_{6/m} enthält, worin L für einen Liganden aus der Reihe der Phosphane der Formel 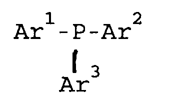 mit der zuvor genannten Bedeutung für Ar¹, Ar² und Ar³ und X für ein Anion der Wertigkeit m steht, insbesondere für Chlorid.

5. Dekorpräparat nach Anspruch 2 oder 3,
dadurch gekennzeichnet,
daß es ein mit einem Phosphan der Formel 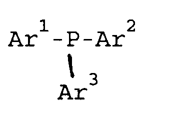 mit der zuvor genannten Bedeutung für Ar¹, Ar² und Ar³ stabilisiertes Goldkolloid mit einem mittleren Durchmesser im Bereich von 10 bis 30 nm enthält.

6. Dekorpräparat nach einem der Ansprüche 1 bis 5,
dadurch gekennzeichnet,
daß es einen wasserlöslichen Goldcluster oder ein wasserlösliches Goldkolloid mit einem stabilisierenden Phosphanliganden der allgemeinen Formel (Phenyl)₃₋ₙP(m-C₆H₄SO₃H)ₙ oder (Phenyl)₃₋ₙP(m-C₆H₄SO₃Me)ₙ mit n gleich 1, 2 oder 3, insbesondere 1, enthält und der zuvor genannten Bedeutung für Me, das bevorzugt für Na steht.

7. Dekorpräparat zur Herstellung eines Glanzgold- oder Poliergolddekors auf einem einbrennfähigen Substrat nach einem der Ansprüche 1 bis 6,
dadurch gekennzeichnet,
daß es im wesentlichen aus einem ligandenstabilisierten Au-Cluster oder Au-Kolloid in einer Menge von 2 bis 40 Gew.-%, für Glanzgoldpräparate insbesondere 5 bis 15 Gew.-%, jeweils berechnet als Gold, einem Lösungsmittel hierfür und einem polymeren organischen Bindemittel besteht sowie bei Bedarf zusätzlich Au(I)-thiolate, Goldsulforesinate und/oder Goldpulver und übliche Hilfsstoffe zur Erzielung der erforderlichen Fließ- und Trocknungseigenschaft, der Brennstabilität, des Farbtons, der Haftung und des Glanzes in wirksamer Menge enthalten kann.

8. Dekorpräparat zur Herstellung eines purpurfarbenen Dekors auf einem einbrennfähigen Substrat nach einem der Ansprüche 1 bis 6,
dadurch gekennzeichnet,
daß es im wesentlichen aus einem ligandenstabilisierten Au-Cluster oder Au-Kolloid in einer Menge von 0,05 bis 10 Gew.-%, vorzugsweise 0,1 bis 2 Gew.-%, jeweils berechnet als Gold, und einer oder mehreren anorganischen Komponenten aus der Reihe der Gläser, Oxide, Silikate sowie oxid- und silikatbildenden Vorstufen besteht.

9. Dekorpräparat nach Anspruch 8,
dadurch gekennzeichnet,
daß es im wesentlichen aus einem mittels eines Sol-Gel-Verfahrens oder einer Copräzipitation mit einer Silikat- und/oder Oxidvorstufe umhüllten ligandenstabilisierten Au-Cluster oder ligandenstabilisierten Kolloid besteht und zusätzlich ein Trägermaterial aus der Reihe einbrennfähiger Materialien, insbesondere Glasfritten, enthalten kann.

10. Dekorpräparat nach Anspruch 8 oder 9,
dadurch gekennzeichnet,
daß es zusätzlich ein polymeres organisches Bindemittel und ein Lösungsmittel enthaltendes flüssiges Medium zur Einstellung erforderlicher Druck- oder Maleigenschaften enthält.

11. Dekorpräparat nach einem der Ansprüche 1 bis 6 zur Herstellung eines lüsterglänzenden Dekors auf einem einbrennfähigen Substat,
dadurch gekennzeichnet,
daß es im wesentlichen aus einem ligandenstabilisierten Au-Cluster oder Au-Kolloid in einer Menge von 0,05 bis zu 5 Gew.-%, berechnet als Gold, einem Lösungsmittel hierfür, einem polymeren Bindemittel und 0 bis 10 Gew.-%, berechnet als Metall, einer oder mehrerer in dem Lösungsmittel gelöster Verbindungen von Elementen aus der Reihe Ti, V, Cr, Fe, Co, Ni, Sn, Bi, Zr besteht und zusätzlich in wirksamer Menge übliche Hilfsstoffe zur Erzielung der zur Anwendung erforderlichen Fließ- und Trocknungseigenschaft, Brennstabilität, Haftung, Farbton und Glanz enthalten kann.

12. Verfahren zur Herstellung eines Dekorpräparats gemäß einem der Ansprüche 1 bis 11,
dadurch gekennzeichnet,
daß es die Schritte umfaßt, Herstellung einer Lösung eines ligandenstabilisierten Au-Clusters oder eines ligandenstabilisierten Au-Kolloids und Zugabe eines organischen Bindemittels und/oder einer oder mehrerer anorganischen Komponenten aus der Reihe der Glasfritten, Oxide, oxid- und silikatbildenden Vorstufen und Silikate, ausgenommen Polyethylenimin beschichteter Glimmer.

13. Verfahren nach Anspruch 12,
dadurch gekennzeichnet,
daß man zur Herstellung eines Präparats gemäß Anspruch 9 eine oder mehrere oxid- und/oder silikatbildende Vorstufen aus der Reihe der Tetraalkoxysilane, Alkyltrialkoxysilane, Tetraalkoxytitanate, Tetraalkoxyzirkonate, teilhydrolysierten Stoffen der genannten Alkoxyverbindungen, Zirkonylchloridhydrate, Wasserglas und Zinn(IV)sulfathydrate einsetzt und in Gegenwart eines in einem Lösungsmittel gelösten ligandenstabilisierten Au-Clusters oder ligandenstabilisierten Au-Kolloids und eines Fällungs- oder Gelierungsmittels eine Copräzipitation oder Gelierung durchführt.

14. Verwendung eines Dekorpräparats gemaß einem der Ansprüche 1 bis 11 oder hergestellt gemäß Anspruch 12 oder 13 zum Dekorieren einbrennfähiger Substrate, insbesondere Glas, Porzellan und Keramik, mit einem Goldfilm-, Lüster- oder Purpurdekor, umfassend Aufbringen des Präparats auf das Substrat und Einbrennen, sowie zum Einfärben von Kunststoffen und Lacken.
